Europäisches Patentamt

**European Patent Office**

Office européen des brevets

(19)

(11) Numéro de publication: **0 111 433**
**A1**

(12)

# DEMANDE DE BREVET EUROPEEN

(21) Numéro de dépôt: **83402302.0**

(22) Date de dépôt: **30.11.83**

(51) Int. Cl.³: **A 01 M 7/00**
**F 16 K 17/04**

(30) Priorité: **03.12.82 FR 8220365**

(43) Date de publication de la demande:
**20.06.84 Bulletin 84/25**

(84) Etats contractants désignés:
**DE GB**

(71) Demandeur: **TECNOMA**
**54 Rue Marcel Paul**
**F-51206 Epernay(FR)**

(72) Inventeur: **Ballu, Patrick Jean-Marie**
**4, Rue du Général Baratier**
**F-51100 Reims(FR)**

(74) Mandataire: **De Boisse, Louis et al,**
**37, Avenue Franklin D. Roosevelt**
**F-75008 Paris(FR)**

(54) Distributeur pour une installation mobile de pulvérisation d'un liquide de traitement des plantes.

(57) Le distributeur comporte un dispositif de réglage de la pression de pulvérisation, constitué selon l'invention, par un pointeau (27), manoeuvrable de l'extérieur par une tige (25), et coopérant avec un siège (31); celui-ci est monté coulissant dans un carter (21) de façon à s'écarter du pointeau (27) en cas de surpression dans le carter (17p) du distributeur; un ressort (29) ramène (31) dans sa position initiale à l'annulation de la surpression.

FIG.:3

- 1 -

## Distributeur pour une installation mobile de pulvérisation d'un liquide de traitement des plantes

La présente invention concerne un distributeur pour une installation mobile de pulvérisation d'un liquide de traitement des plantes.

Beaucoup d'installations mobiles de pulvérisation de liquides de traitement des plantes comportent une pompe actionnée à partir du moteur du véhicule tracteur ou porteur. Avec les installations de ce genre, il se pose le problème d'obtenir un débit constant de liquide pulvérisé par hectare quel que soit le régime du moteur du véhicule, pour un même rapport de sa boîte de vitesses, et quel que soit le nombre des rampes de pulvérisation en service.

Pour résoudre ce problème, on a déjà réalisé, pour les installations mobiles de pulvérisation qui viennent d'être indiquées, des distributeurs qui comportent chacun des moyens pour, à la coupure du débit de chaque rampe de pulvérisation, dériver le même débit vers une conduite de retour, ainsi qu'un pointeau de réglage de la pression régnant dans le distributeur. On comprend que la mise en ou hors service d'une ou plusieurs conduites d'alimentation de rampes de pulvérisation entraîne ainsi des variations négligeables de la pression régnant dans le distributeur, dont la valeur a été ajustée à l'aide du pointeau de réglage.

Les distributeurs connus, qui viennent d'être indiqués, sont réalisés généralement chacun par juxtaposition en un bloc unique, de différents composants, notamment des robinets à trois voies, le pointeau de réglage de la pression, un clapet de sécurité...etc. Ces différents composants sont juxtaposés de manière à être raccordés entre eux de façon étanche, par l'intermédiaire de jonctions étanches. Bien entendu, l'encombrement, notamment la longueur, d'un tel distributeur est d'autant plus grande que son nombre de composants est plus élevé.

La présente invention permet de réduire le nombre des composants, et par suite l'encombrement d'un distributeur du type qui vient d'être indiqué.

Le distributeur selon la présente invention est caractérisé par le fait que le pointeau de réglage de la pression coopère avec un siège, qui est monté mobile par rapport au carter du pointeau, de manière que, sous l' effet d'une surpression s'établissant en amont dudit pointeau, son siège s'en écarte en comprimant un ressort de rappel, qui ramène ledit siège dans sa position initiale à l'annulation de la surpression.

Le pointeau de réglage de la pression dont est équipé le distributeur selon la présente invention est donc aménagé de manière à fonctionner également en clapet de sécurité, grâce à la mobilité du siège de son pointeau. Il en résulte une simplification de la fabrication et de la maintenance du distributeur selon la présente invention, et, par suite, une réduction de son coût et de son encombrement.

Dans une forme de réalisation préférée du distributeur selon la présente invention, le pointeau de réglage de la pression est monté, de façon connue en soi, coulissant axialement dans une première partie d'un carter tubulaire, par exemple à l'extrémité intérieure d'une tige de manoeuvre traversant un fond dudit carter, de façon à être manoeuvrable de l'extérieur ; cette forme de réalisation de l'invention est caractérisée par le fait que le siège du pointeau est monté coulissant, avec étanchéité, dans la seconde partie du carter tubulaire, et qu'un ressort hélicoïdal de rappel est interposé entre ledit siège et une butée axiale, montée près de l'extrémité du carter, opposée à son fond.

Une autre caractéristique avantageuse du distributeur selon la présente invention concerne chacun des robinets à trois voies dont il doit être équipé pour chaque rampe de pulvérisation de l'installation, ce robinet à trois voies étant destiné à ouvrir l'alimentation de la rampe correspondante, ou à la couper et à la dériver vers une conduite de retour ; chaque robinet à trois voies peut comporter, de façon connue en soi, un clapet, dont le siège est inséré entre le carter tubulaire du distributeur et une tubulure de raccordement à la rampe correspondante, et qui peut être manoeuvré de l'extérieur, par exemple au moyen d'un levier pivotant, de façon à coulisser suivant l'axe d'un alésage coaxial au siège du clapet. Selon la présente invention, chaque robinet à trois voies comporte en outre une tubulure, qui peut être raccordée à une conduite de retour, et qui communique avec l'alésage coaxial au siège du clapet, par une lumière ; un obturateur est d'autre part fixé au corps du clapet de chaque robinet à trois voies, et conformé de façon à coopérer avec une partie au moins de la paroi dudit alésage, de telle sorte que l'obturateur ferme ladite lumière de façon étanche lorsque le corps du clapet est en position d'ouverture, et la démasque lorsque le corps du clapet est en position de fermeture.

Cette forme de réalisation des robinets à trois voies dont est pourvu le distributeur selon la présente invention est particulièrement avantageuse dans la mesure où la commutation du robinet est assurée par un organe unique, à savoir le corps du clapet et l'obturateur fixé à ce corps, ce qui simplifie la fabrication du robinet à trois voies, et réduit son coût, tout en accroissant l'efficacité de son fonctionnement.

A titre d'exemple, on a décrit ci-dessous et illustré schématiquement au dessin annexé, une forme de réalisation du distributeur selon la présente invention, pour une installation mobile de pulvérisation d'un liquide de traitement des plantes.

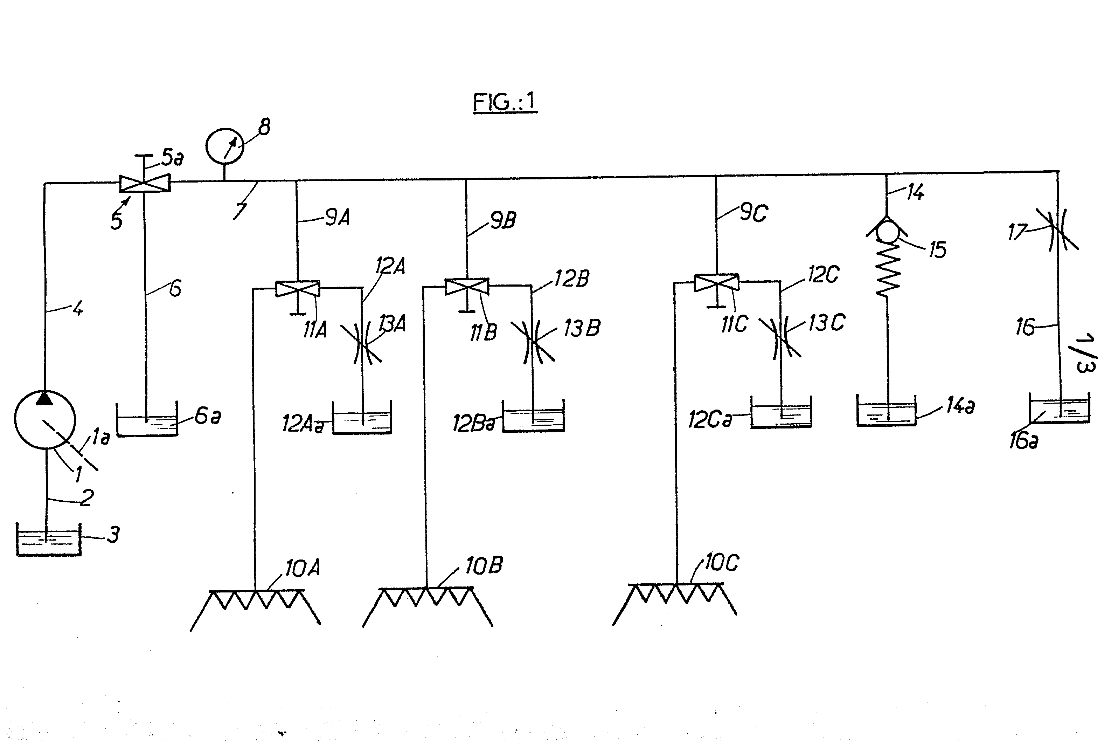

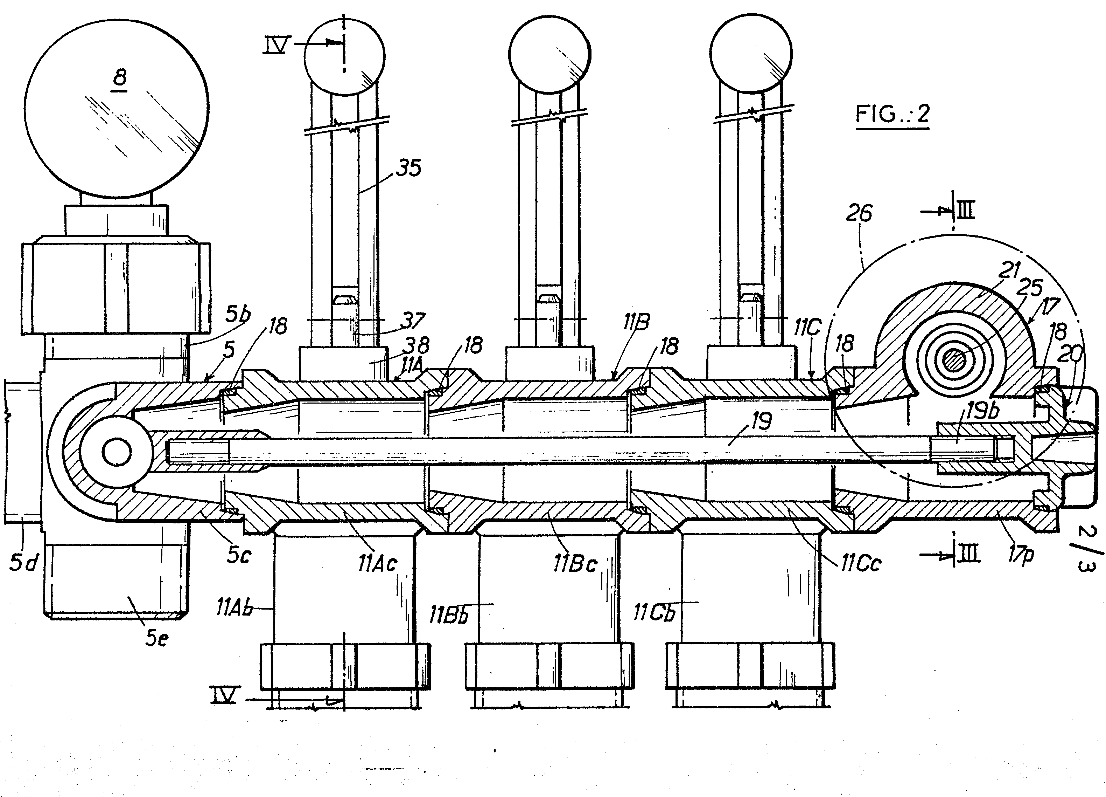

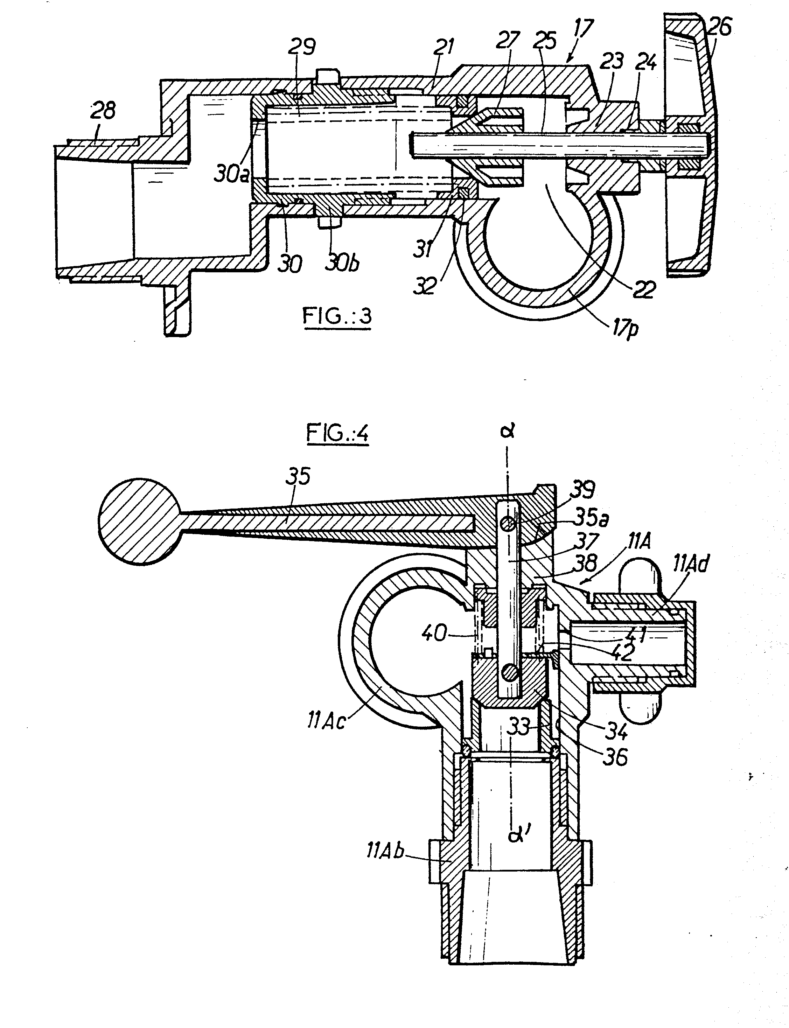

La figure 1 est le schéma théorique d'une installation mobile de pulvérisation d'un liquide de traitement des plantes, susceptible d'être équipée d'un distributeur selon la présente invention. La figure 2 montre une forme de réalisation du distributeur selon la présente invention, en coupe partielle par un plan axial. La figure 3 est une vue en coupe suivant la ligne III-III de la figure 2. La figure 4 est une vue en coupe suivant la ligne IV-IV de la figure 2.

L'installation mobile de pulvérisation d'un liquide de traitement des plantes, dont le schéma de principe est représenté sur la figure 1, comporte, de façon connue en soi, une pompe 1, qui peut être d'un type quelconque, et dont l'arbre d'entraînement, 1a, peut être accouplé avec le moteur du véhicule tracteur ou porteur, par exemple avec la prise de force d'un tracteur agricole. La pompe 1 aspire, par une conduite 2, le liquide de traitement à pulvériser dans un réservoir 3, et le refoule dans une conduite 4, aboutissant à l'entrée d'un robinet général à trois voies, 5, à commande manuelle 5a ; ce robinet général 5 permet d'envoyer le liquide refoulé par la pompe 1 dans la conduite 4, soit vers une conduite de retour 6, aboutissant dans un collecteur 6a, éventuellement raccordé au réservoir 3, soit dans une conduite générale 7, sur laquelle sont montés en dérivation un manomètre 8, ainsi que des conduites 9A, 9B, 9C ..., destinées à l'alimentation des rampes de pulvérisation de l'installation, 10A, 10B, 10C ... ; entre chacune des conduites 9A, 9B ... , et la rampe correspondante, 10A, 10B .. est inséré un robinet à trois voies, 11A, 11B .., dont la troisième voie aboutit à un collecteur, 12Aa, 12Ba ... , par une conduite de retour 12A, 12B ..., dans laquelle est inséré un étranglement réglable, 13A, 13B .. Enfin, la conduite générale 7 est reliée à un collecteur 14a, par une conduite de retour 14, dans laquelle est inséré un clapet de sécurité 15, ainsi qu'à un collecteur 16a, par une conduite de retour 16, dans laquelle est inséré un étranglement réglable 17, matérialisé notamment par un pointeau de réglage.

Pour que chacune des rampes de pulvérisation 10A, 10B ... de l'installation de la figure 1 délivre un débit constant de liquide pulvérisé par hectare, lorsque la boîte de vitesse du tracteur est enclenchée sur un rapport déterminé, et que la vitesse d'entraînement de la pompe 1 varie éventuellement comme le régime du moteur du tracteur, il suffit au conducteur de ce dernier d'ajuster, à l'aide du pointeau de réglage 17, placé à sa portée, la pression qui règne dans la conduite générale 7, et qu'il peut lire sur le manomètre 8, placé également à sa portée. Dans ces conditions, la mise en ou hors service de l'une des rampes de pulvérisation 10A, 10B... est sans effet sur la pression ainsi réglée, puisque, par exemple, lorsque le conducteur manoeuvre le robinet à trois voies, 11A, de façon à mettre hors service la rampe 10A, le débit du liquide amené par la conduite d'alimentation 9A est alors dérivé vers la conduite de retour 12A, dont l'étranglement, 13A, a été auparavant réglé expérimentalement de manière que ce débit de retour, vers le collecteur 12Aa, soit égal au débit d'alimentation de la rampe 10A lorsqu'elle est en service.

Le distributeur selon la présente invention, dont une forme de réalisation est représentée sur les figures 2 à 4, peut être incorporé dans l'installation mobile de pulvérisation d'un liquide de traitement des plantes, dont le schéma est illustré sur la figure 1. Ce distributeur regroupe, notamment, comme on peut le voir sur la figure 2, le robinet général à trois voies 5, le manomètre 8, les robinets à trois voies, 11A, 11B et 11C, correspondant respectivement aux trois rampes de pulvérisation 10A, 10B et 10C, ainsi que le pointeau de réglage de la pression 17, dans lequel est incorporé le clapet de sécurité 15, comme cela résultera de la description de la figure 1.

Chacun des composants 5, 11A, 11B, 11C et 17 comporte, pour le premier, une tubulure 5c à embouchure cylindrique, pour les trois suivants, des carters tubulaires 11Ac, 11Bc et 11Cc, et pour le dernier, le plus à droite sur la figure 2, une tubulure 17p. Comme visible sur la figure 2, les carters tubulaires 11Ac, 11Bc et 11Cc sont montés bout à bout avec interposition de joints d'étanchéité 18 ; son extrémité gauche est formée par la tubulure 5c du robinet général à trois voies, 5, avec interposition d'un joint 18, tandis que son extrémité droite est formée par la tubulure 17p avec interposition d'un joint 18 ; l'assemblage mécanique des différentes pièces est assuré par une tige 19, surmoulée sur le robinet à trois voies 5 et dont l'autre extrémité 19b est vissée dans un trou taraudé d'une saillie intérieure d'un bou-

0111433

chon 20, obturant l'extrémité droite de la tubulure 17p avec interposition d'un joint d'étanchéité 18. On voit encore sur la figure 2 que le robinet général à trois voies 5 comporte, en plus de la tubulure, déjà mentionnée, 5c, et de la tubulure, 5b, de raccordement du manomètre 8, une tubulure 5d ou 5e, destinée au raccordement de la conduite 4 (figure 1) dans laquelle la pompe 1 refoule le liquide à pulvériser.

Comme visible sur la vue en coupe de la figure 3, le pointeau de réglage de la pression, 17, comporte un carter tubulaire 21, qui s'étend latéralement et perpendiculairement à la tubulure 17p, déjà mentionnée, qui constitue une sorte de prolongement terminal du carter du distributeur, formé par les éléments tubulaires 5c, 11Ac, 11Bc et 11Cc ; le prolongement tubulaire 17p et le carter tubulaire 21 communiquent par une ouverture 22, qui débouche dans une première partie dudit carter tubulaire 21, laquelle est fermée, vers la droite de la figure 3, par un fond 23, qui, dans la réalisation illustrée, est d'une seule pièce, par exemple venu de moulage avec le carter tubulaire 21 ; ce fond 23 est traversé par un trou taraudé 24, dans lequel est vissée une tige filetée de manoeuvre 25 ; sur l'extrémité extérieure de la tige 25 est calé un volant de manoeuvre 26, tandis que sur son extrémité intérieure est calé, ou fixé par tous moyens appropriés, un corps de pointeau 27, présentant une surface conique, lisse ou rodée, vers la partie gauche de la figure 3. Dans la seconde partie du carter tubulaire 21, qui est située sur la partie gauche de la figure 3, et qui peut être raccordée à une conduite de retour telle que 16 (figure 1), par l'intermédiaire d'une tubulaire 28, est disposé un ressort hélicoïdal 29, qui est inséré entre une butée axiale 30, solidaire de la paroi interne du carter 21, et un siège 31, qui est monté cou-lissant dans ladite seconde partie, gauche, du carter tubulaire 21. L'étanchéité entre la paroi interne du carter 21 et le siège 31 est assurée par une bague torique d'étanchéité, 32. Dans la forme de réalisation illustrée, la butée axiale 30 est matérialisée par une douille cylindrique dont le fond, situé le plus à gauche sur la figure 3, présente une large ouverture 30a, tandis que sa paroi latérale présente des saillies telles que 30b, qui coopèrent avec des évidements complémentaires de la paroi du carter tubulaire 21 pour assurer l'immobilisation axiale de la douille 30. Le fond perforé de la douille 30 et la partie du siège 31 tournée vers lui présentent des surfaces d'application pour les spires extrêmes du ressort hélicoïdal 29. Comme visible sur la figure 3, le ressort hélicoïdal 29 est dimensionné de manière à appliquer le siège 31 contre la partie conique du pointeau 27 lorsque celui-ci occupe la position de fermeture qui est illustrée sur la figure 3, et qui correspond à l'enfoncement maximum de la tige de manoeuvre 25 dans le carter 21. Bien entendu, lorsque l'on fait tourner le volant de manoeuvre 26 de manière que la tige de manoeuvre écarte le pointeau 27, ou tout au moins sa surface conique, du siège 31, il se crée, entre la surface conique du pointeau et son siège 31, un orifice annulaire de passage, qui va en augmentant progressivement au fur et à mesure de la rotation du volant 26, puisque ledit siège 31 est maintenu dans sa position précédente par six nervures dans la pièce 17. En actionnant ainsi manuellement le volant 26 de manoeuvre, le conducteur du véhicule tracteur ou porteur de l'installation peut ajuster la pression régnant dans le carter 5c-11Ac-11Bc-11Cc-17p du distributeur, à une valeur lue sur le manomètre 8.

Si, pour une raison quelconque, il se produit une surpression dans le carter du distributeur, cette surpression s'établit également dans la partie droite du carter tubulaire 21, et, en raison de la perte de charge à travers l'étroit orifice annulaire réglé entre le pointeau 27 et son siège 31, les deux faces dudit siège 31 sont soumises à des pressions différentes, si bien que ledit siège coulissant 31 est soumis à une force résultante, parallèle à l'axe du carter tubulaire 21, et dirigée vers la gauche de la figure 3 ; cette force résultante a pour effet de déplacer le siège coulissant 31 vers la gauche en comprimant le ressort hélicoïdal 29 contre sa butée axiale 30. Ce mouvement du siège 31 a évidemment pour effet d'agrandir considérablement l'orifice annulaire de passage entre ledit siège et le pointeau 27, et de permettre par suite l'annulation rapide de la surpression établie dans le carter du distributeur. Bien entendu, dès que cette surpression est annulée, le ressort de rappel 29, en se détendant, ramène le siège coulissant 31 dans sa position initiale, ce qui rétablit le réglage initial de la section de passage au niveau du corps 27 du pointeau, dont dépend la pression régnant, en régime permanent, dans ledit carter du distributeur.

La présente invention n'est pas limitée à la forme de réalisation précédemment décrite du pointeau de réglage de la pression ; elle englobe toutes ses variantes, dont quelques unes seulement vont être indiquées ci-après, à titre d'exemples non limitatifs : la réalisation de la butée axiale 30 du ressort hélicoïdal 29 est matière à option ; elle pourrait être venue de fonderie avec la paroi du carter tubulaire 21. Le ressort hélicoïdal 29 pourrait travailler en permanence à la compression, à condition que la position normale du siège coulissant, 31, du pointeau soit définie par une seconde butée radiale, qui serait située à droite (sur la figure 3) dudit siège 31, et contre laquelle ce dernier serait appliqué, par le ressort 29, en l'absence de surpression dans le distributeur. L'organe de manoeuvre du corps 27 du pointeau est également matière à option ; sa tige de manoeuvre pourrait être montée coulissante dans un perçage du fond 23.

La figure 4 montre que le robinet à trois voies 11A, comme d'ailleurs chacun des autres robinets, 11B, 11C.., associés respectivement aux autres rampes de l'installation, comporte un clapet, dont le siège 33 est inséré entre le carter tubulaire du distributeur, ou tout au moins de sa partie 11Ac (voir aussi la figure 2), d'une part, et une tubulure de raccordement 11Ab, d'autre part, destinée à être raccordée à la rampe de pulvérisation correspondante (10A sur la figure 1) par une conduite appropriée. D'autre part, le corps 34 du clapet peut être manoeuvré de l'extérieur, au moyen d'un levier pivotant 35, de façon à coulisser suivant l'axe α – α' d'un alésage 36, coaxial au siège 33 du clapet. Dans la forme de réalisation illustrée, le corps de clapet 34 est fixé à l'extrémité d'une tige 37, qui s'étend suivant l'axe α – α', et qui traverse de façon étanche, grâce à des joints appropriés, un perçage de la paroi 38 obturant l'alésage 36 vers le haut de la figure 4. L'extrémité externe de la tige 37 est articulée par un axe 39 sur l'extrémité correspondante du levier 35, dont un côté, 35a, est adapté pour former une came, coopérant avec un profil complémentaire, sur la surface externe du fond 38, précédemment mentionné. Dans la position horizontale du levier 35 qui est illustrée sur la figure 4, la tige 37 est enfoncée au maximum dans l'alésage 36, de manière à appliquer le corps de clapet 34 sur son siège 33, notamment grâce à l'action d'un ressort hélicoïdal 40. Par ailleurs, selon la présente invention, chaque robinet à trois voies tel que 11A comporte une tubulure latérale, 11Ad, qui peut être raccordée à une conduite de retour telle que 12A (figure 1), où est inséré un étranglement réglable 13A, et cette tubulure de retour communique avec l'alésage 36, coaxial au siège 33 du clapet, par une lumière 41 ; un obturateur 42 est fixé sur la face du corps de clapet 34, opposée à son siège 33, cet obturateur étant conformé de façon à coopérer avec une partie au moins de la paroi de l'alésage 36 ; cet obturateur 42 peut être constitué par une pièce de tôle mince, dont la forme est matière à option ; elle doit seulement être conformée de telle sorte que cet obturateur 42 démasque la lumière 41 lorsque le corps de clapet 34 est dans sa position de fermeture, illustrée sur la figure 4, tandis qu'il ferme de façon étanche la lumière 41 lorsque le corps de clapet 34 est en position d'ouverture, c'est-à-dire qu'il a été écarté de son siège 33 par un mouvement ascendant de translation, communiqué à la tige 37 par le pivotement du levier de manoeuvre 35 depuis sa position horizontale de la figure 4, jusqu'à une position sensiblement verticale. A titre de variante, l'obturateur 42 pourrait être d'une seule pièce avec le corps de clapet 34. D'autre part, les moyens pour déplacer le corps de clapet 34 en translation sont matières à option.

REVENDICATIONS DE BREVET

1. Distributeur pour une installation mobile de pulvérisation d'un liquide de traitement des plantes, permettant d'obtenir un débit constant de liquide pulvérisé par hectare, et comportant des moyens pour, à la coupure du débit de chaque rampe de pulvérisation (10A, 10B...), dériver le même débit vers une conduite de retour (12A, 12B ...), ainsi qu'un pointeau (27) de réglage de la pression régnant dans le distributeur, ce pointeau (27) étant monté coulissant axialement dans une première partie d'un carter tubulaire (21), par exemple à l'extrémité intérieure d'une tige manoeuvre (25) traversant un fond (23) dudit carter (21) de façon à être manoeuvrable de l'extérieur, distributeur caractérisé par le fait que le siège (31) du pointeau (27) est monté coulissant, avec étanchéité, dans la seconde partie du carter tubulaire (21), et qu'un ressort hélicoïdal de rappel (29) est interposé entre ledit siège (31) et une butée axiale (30), montée près de l'extrémité du carter (21), opposée à son fond (23), de manière que, sous l'effet d'une surpression s'établissant en amont dudit pointeau (27), son siège (31) s'en écarte en comprimant le ressort de rappel (29), qui ramène ledit siège (31) dans sa position initiale à l'annulation de la surpression.

2. Distributeur selon la revendication 1, caractérisé par le fait que le carter tubulaire (21) du pointeau s'étend latéralement et perpendiculairement au carter tubulaire ou à un prolongement terminal (17p) du carter du distributeur, les deux carters tubulaires (17p, 21) communiquant par une ouverture (22) située au niveau de la tige de manoeuvre (25) du pointeau (27), qui est de préférence filetée et vissée dans le fond (23) du carter (21) dudit pointeau, et que la seconde partie du carter tubulaire (21) du pointeau peut être raccordée par une tubulure (28) à une conduite de retour.

3. Distributeur selon l'une quelconque des revendications 1 et 2, comportant, pour chaque rampe de pulvérisation (10A, 10B ...), un robinet à trois voies (11A, 11B ...), pour ouvrir l'alimentation de la rampe (10A, 10B ...), ou la couper et la dériver vers une conduite de retour (12A, 12B ...), chaque robinet à trois voies (11A, 11B ...) comportant un clapet (34) dont le siège (33) est inséré entre le carter tubulaire (11Ac) du distributeur et une tubulure (11Ab) de raccordement à la rampe correspondante (10A, 10B ...), et qui peut être manoeuvré de l'extérieur, par exemple au moyen d'un levier pivotant (35), de façon à coulisser suivant l'axe (α-α') d'un alésage (36) coaxial au siège (33) du clapet (34), distributeur caractérisé par le fait que chaque robinet à trois voies (11A, 11B ...) comporte en outre une tubulure (11Ad), qui peut être raccordée à une conduite de retour (12A), et qui communique avec l'alésage (36), coaxial au siège (33) du clapet (34), par une lumière (41), et qu'un obturateur (42) est fixé au corps (34) du clapet de chaque robinet à trois voies (11A, 11B ..), et conformé de façon à coopérer avec une partie au moins de la paroi dudit alésage (36), de telle sorte que l'obturateur (42) ferme ladite lumière (41) de façon étanche lorsque le corps (34) du clapet est en position d'ouverture, et la démasque lorsque le corps (34) du clapet est en position de fermeture.

FIG.:1

1/3

FIG.:2

FIG.:3

FIG.:4

# 0111433

**Office européen des brevets**

## RAPPORT DE RECHERCHE EUROPEENNE

Numéro de la demande

EP 83 40 2302

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl ³) |
|---|---|---|---|
| X | FR-A-2 166 835 (J.B. VENDITTI) * Page 2, ligne 22 - page 3, ligne 19; figures 1,2 * | 1-3 | A 01 M 7/00 <br> F 16 K 17/04 |
| A | AU-B- 66 860 (ASH DESIGNS PTY. LTD.) (1965) | | |
| A | FR-A-2 323 310 (J. BILLAUD) | | |
| A | GB-A-1 055 032 (SPRAYING SYSTEMS CO.) | | |

**DOMAINES TECHNIQUES RECHERCHES (Int. Cl. ³)**

A 01 M
F 16 K

Le présent rapport de recherche a été établi pour toutes les revendications

| Lieu de la recherche <br> LA HAYE | Date d'achèvement de la recherche <br> 08-02-1984 | Examinateur <br> NEHRDICH H.J |
|---|---|---|

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant